# EUROPÄISCHE PATENTSCHRIFT

(11) **EP 0 825 253 B1**
(45) Veröffentlichungstag und Bekanntmachung des Hinweises auf die Patenterteilung: **29.11.2000**
(21) Anmeldenummer: 97113938.1
(22) Anmeldetag: 13.08.1997
(51) Int. Cl.: C12G 3/04

(54) **Safranspirituose**
Saffron liquor
Eau-de-vie de safran

(30) Priorität: 19.08.1996 DE 19633393
(43) Veröffentlichungstag der Anmeldung: 25.02.1998
(73) Patentinhaber: Rohmeder, Jürgen, Dr., 3982 Bitsch (CH)
(72) Erfinder: Rohmeder, Jürgen, Dr., 3982 Bitsch (CH)
(74) Vertreter: Abitz, Walter, Dr.-Ing.

(56) Entgegenhaltungen:
- FR-A- 2 593 030
- GB-A- 2 012 547
- SU-A- 1 745 125
- PATENT ABSTRACTS OF JAPAN vol. 095, no. 008, 29. September 1995 (1995-09-29) & JP 07 135936 A (YOSHIHIDE HAGIWARA), 30. Mai 1995 (1995-05-30)
- J. FALBE ET AL.: "Römpp Chemie Lexikon" 20. Februar 1995 (1995-02-20) , GEORG THIEME VERLAG , STUTTGART, DE XP002109303 211360 * Seite 3965 *

## Beschreibung

Die vorliegende Erfindung betrifft eine Safranbestandteile enthaltende Zusammensetzung, daraus hergestellte Sirupe und Spirituosen sowie Verfahren zu ihrer Herstellung.

Safran enthaltende Spirituosen sind bekannt. Dabei wird der Safran jedoch zum Gelbfärben eingesetzt, und nicht wegen seines Eigengeschmackes (siehe Römpp-Chemie-Lexikon, 9. Auflage, Band 5, 1992, Seite 3965, Stichwort: Safran).

Weiterhin sind in den Sortimenten von Aromen-Herstellern Safran-Aromen vertreten, die z.B. durch Extraktion, Gefriertrocknung und Vermischen mit Glucose hergestellt werden. Diese Aromen sind jedoch zur Herstellung von alkoholhaltigen Getränken oder Spirituosen wenig geeignet, da sie bei der Weiterverarbeitung nach Hinzufügen anderer Bestandteile zu Trübungen, sofort oder zeitverzögert eintretend, neigen. Diese Safran-Aromen werden nicht zur Herstellung von Safranspirituosen verwendet, sondern zur Aromatisierung von Fertigspeisen.

In der GB 2 012 547 A sind schließlich Getränke beschrieben, die neben verschiedenen Zuckern und gegebenenfalls Alkohol eine färbunde Substanz enthalten, die u.a. ein Safran-Extraht sein kann. Auch hier wird Safran aber wieder zum Färben eingesetzt.

Aufgabe der vorliegenden Anmeldung ist es daher, Spirituosen mit Safrangeschmack zur Verfügung zu stellen.

Diese Aufgabe wird durch Zusammensetzungen gelöst, die neben Ethanol und Safranbestandteilen, die durch Entfernung des cellulosehaltigen Materials aus Safranfäden erhältlich sind, ein oder mehrere Monosaccharide mit mindestens vier Kohlenstoffatomen enthalten, sowie durch daraus hergestellte Sirupe und Spirituosen.

Es wurde überraschenderweise festgestellt, daß bei den Safranspirituosen, die unter Verwendung der Monosaccharide enthaltenden Zusammensetzungen hergestellt wurden, der Safrangeschmack entsprechend der eingesetzten Safrankonzentration variiert. Im Gegensatz dazu tritt bei der Verwendung von Disacchariden anstelle von Monosacchariden sehr bald eine Sättigung ein, d.h. auch bei steigender Safrankonzentration, ist schon bald keine Geschmacksintensivierung mehr feststellbar. Durch die Verwendung von Monosacchariden in den erfindungsgemäßen Zusammensetzungen können daher Safranspirituosen entsprechend den Geschmackswünschen der Verbraucher mit geringerem oder stärkerem Safrangeschmack bereitgestellt werden, während dies mit Disaccharide enthaltenden Zusammensetzungen nicht möglich ist.

Die erfindungsgemäßen Zusammensetzungen enthalten nicht direkt Safran oder Safranfäden, vielmehr werden die nach Entfernung des cellulosehaltigen Materials aus Safranfäden (durch Extraktion mit beispielsweise Ethanol oder Ethanol/Wasser) verbleibenden Safranbestandteile verwendet, da ansonsten diese Celluloseprodukte des Safrans zu einer Trübung der Spirituose führen würden. Bei den eingesetzten Safranfäden handelt es sich um die weiblichen, getrockneten Blütennarben der Safranpflanze (Crocus sativus, Iridaceae), die käuflich erhältlich sind.

Als Monosaccharide können alle Monosaccharide mit mindestens vier Kohlenstoffatomen eingesetzt werden, die in der Regel durch die allgemeine Summenformel CₙH₂ₙOₙ mit n größer gleich 4 wiedergegeben werden können. Bevorzugt sind die C₆-Monosaccharide, insbesondere bevorzugt sind Glucose (z.B. D-Glucose) und/oder Fructose. Selbstverständlich können die verschiedenen Stereoisomere der Monosaccharide gleichermaßen eingesetzt werden.

Als Ethanol kann 100%iges Ethanol, vorzugsweise jedoch 96%iges Ethanol, verwendet werden. (Je nach Herstellungsverfahren (siehe unten) und verwendetem Ethanol können die erfindungsgemäßen Zusammensetzungen daher gegebenenfalls auch Wasser enthalten.)

Das Gewichtsverhältnis von (cellulosefreien) Safranbestandteilen zu Monosaccharid(en) in den erfindungsgemäßen Zusammensetzungen beträgt 1 zu 100 bis 700, vorzugsweise ca. 1 zu 200.

Das Verhältnis von Ethanol zu den weiteren Bestandteilen der Zusammensetzung variiert von der eingesetzten Menge sowie (wegen seiner Flüchtigkeit) den bei der Herstellung der Zusammensetzung angewendeten speziellen Verfahrensbedingungen.

Die Konzentration der Safranbestandteile in den erfindungsgemäßen Zusammensetzungen beträgt 0,05 - 0,8 Gew.-%, vorzugsweise 0,15 - 0,5 Gew.-% (bezogen auf die erfindungsgemäße Zusammensetzung).

Die erfindungsgemäßen Zusammensetzungen können nach dem folgenden allgemeinen Verfahren hergestellt werden. Käufliche Safranfäden werden gemahlen und dann mit 2 bis 10 Milliliter Wasser (hier und im folgenden demineralisiertes Wasser) pro Gramm Safran durchfeuchtet. (Alle Safran-Mengenangaben beziehen sich auf das anhand einer Probe bestimmte Trockengewicht des eingesetzten Safranpulvers.) Die wäßrige Suspension wird dann mit 50 bis 200 ml, vorzugsweise ca. 100 ml, Ethanol (vorzugsweise 96%ig) pro Gramm Safran mazeriert und nach ca. 15 bis 60 Minuten abfiltriert. Um die Safranbestandteile vollständiger zu extrahieren, kann der Rückstand erneut mit 2 bis 10 ml, vorzugsweise ca. 5 ml, Wasser und 50 bis 200 ml, vorzugsweise ca. 100 ml, Ethanol für 15 bis 60 Minuten mazeriert und abschließend kurz (ein bis fünf Minuten) im kochenden Wasserbad schüttelnd erhitzt werden. Nach dem Abkühlen auf Raumtemperatur wird diese zweite Extraktionslösung filtriert und mit dem ersten Filtrat vereinigt. Um unlösliche Bestandteile vollständig abzutrennen, können die vereinigten Filtrate noch einige Stunden stehengelassen (beispielsweise 6 bis 24 Stunden) und dann erneut filtriert werden. Durch die Extraktion werden ca. 20%, überwiegend Cellulose, des eingesetzten Safrans entfernt. Von dem Filtrat wird eine kleine Probe entnommen und bei einer Maximaltemperatur von 50°C bis zur Trockenheit eingeengt. Aus dem ausgewogenen Rückstand kann der Gesamttrockenrückstand des verbleibenden Filtrats berechnet werden. In das Filtrat werden ein oder mehrere Monosaccharide (vorzugsweise Glucose oder Fructose) in einem Gewicht eingerührt, das dem 100- bis 700fachen des Gesamttrockenrückstandes des Filtrats entspricht. Die Lösung wird dann bis zur gleichmäßigen Konsistenz des Teiges durchgerührt.

Die auf diese Weise erhaltenen Zusammensetzungen oder Teige können zu den erfindungsgemäßen Sirupen weiterverarbeitet werden, indem der Teig mit einer Lösung aus einem oder mehreren Monosacchariden (vorzugsweise Glucose) und Wasser versetzt wird. Hierzu wird zunächst die Lösung aus Monosaccharid(en) (0,5 bis 2 kg, vorzugsweise ca. 1 kg, Monosaccharid(e) pro Gramm Safran) in Wasser (1,5 bis 7 kg, vorzugsweise ca. 3,3 kg, Wasser pro Gramm Safran) heiß bis zu einer klaren und bläschenfreien Lösung gelöst. Diese Lösung wird dann auf unter 50°C, vorzugsweise ca. 40°C, abgekühlt und mit dem zuvor hergestellten Safranteig versetzt, wobei gegebenenfalls, um eine klare, bläschenfreie Lösung zu erhalten, in einem Wasserbad leicht auf 40°C erhitzt werden kann, um die erfindungsgemäßen Sirupe zu liefern.

Bei den verschiedenen hier beschriebenen Verfahren ist es bevorzugt, eine Reaktionstemperatur von 50°C nicht zu überschreiten, soweit Safran bzw. Safranbestandteile betroffen sind, da bei höheren Temperaturen die duftbildenden Komponenten des Safrans verstärkt verdampfen bzw. abgebaut werden (beispielsweise durch Esterspaltungen). Daher sind in diesen Fällen Temperaturen von ca. maximal 40°C bevorzugt.

Bei den erfindungsgemäßen Sirupen beträgt dann das Gewichtsverhältnis von Safranbestandteilen zu Monosaccharid(en) in den Sirupen 1 zu 500 - 4500, vorzugsweise 1 zu 1000 - 2000, und die Konzentration der Safranbestandteile in den Sirupen 0,005 - 0,15 Gew.-%, vorzugsweise 0,015 - 0,05 Gew.-% (bezogen auf Sirup).

Insbesondere bevorzugt ist die gemeinsame Verwendung von Glucose und Fructose in den erfindungsgemäßen Sirupen, wodurch sich gegenüber der alleinigen Verwendung von Glucose eine ca. 20%ige Safran-Ersparnis ergibt, d.h. es kann mit ca. 20% weniger eingesetzten Safranbestandteilen dieselbe Geschmacksintensität in den Endprodukten erreicht werden.

Die oben beschriebenen Teig- und Sirupprodukte können gleich weiterverarbeitet werden. Bei der Verwendung von Fructose und/oder Glucose ist es jedoch bevorzugt, den Teig vor der Weiterverarbeitung einige Stunden (beispielsweise 10-12 Stunden) stehenzulassen. Dies führt zu einer Erhöhung der Lagerfähigkeit der schließlich daraus hergestellten Safranspirituose.

Die nach dem oben beschriebenen Verfahren erhaltenen Sirupprodukte können dann schließlich zu Safranspirituosen, beispielsweise Likören oder Aperitifs, mit variierenden Alkoholgehalten (beispielsweise 10 - 40 Vol.-%) weiterverarbeitet werden. Hierzu wird der Safran-Monosaccharid-Sirup mit einer Lösung aus Zucker (ca. 50 bis 200 g Saccharose pro 100 g Sirup), Wasser (ca. 35 bis 150 g Wasser pro 100 g Sirup) und einem alkoholischen Getränk (beispielsweise Weinbrand) und/oder Ethanol (beispielsweise 96%ig) versetzt und zur Bildung einer klaren Lösung gegebenenfalls leicht erwärmt. Die eingesetzte Alkoholmenge kann in Abhängigkeit von der gewünschten Konzentration in der Spirituose variieren und ca. 30 - 300 g Ethanol und/oder alkoholhaltiges Getränk pro 100 g Sirup betragen. Schließlich kann das erhaltene Produkt durch Zusatz von weiterem Wasser verdünnt werden und die Konzentration des Alkohols damit entsprechend den Wünschen der Verbraucher eingestellt werden. Gegebenenfalls können auch noch weitere Zusatzstoffe, beispielsweise Aromastoffe oder Tinkturen, zugesetzt werden.

Die Konzentration der Safranbestandteile in den Safranspirituosen beträgt dann 0,0005 - 0,07 Gew.-%, vorzugsweise 0,002 - 0,02 Gew.-% (bezogen auf die Spirituose).

Die Verwendung von Fructose im Gemisch mit Glucose ermöglicht die Herstellung von Safranspirituosen, die intensiv nach Safran schmecken und gleichzeitig süß sind (ähnlich der üblicherweise mit Saccharose erzielten Süße). Wird dagegen als Monosaccharid ausschließlich Glucose eingesetzt, so weisen die erhaltenen Safranspirituosen einen spezifischen Traubenzuckergeschmack auf, sind weniger süß und schmecken weniger intensiv nach Safran als die entsprechenden Produkte, bei denen eine Kombination von Glucose und Fructose eingesetzt wird. Dies ermöglicht es also, die Geschmacksintensität nicht nur über die eingesetzte Safranmenge, sondern auch über das eingesetzte Monosaccharid zu steuern.

Die Erfindung wird durch die folgenden Beispiele weiter veranschaulicht.

### Beispiel 1a: Herstellung eines Glucose enthaltenden Konzentrats

100 g Safranfäden werden gemahlen und mit einem nichtmetallischen Sieb der lichten Maschenweite von 710 bis 180 Mikrometer gesiebt. Die Feuchte des Safranpulvers wird anhand einer Probe bestimmt. Die ermittelte Feuchtigkeit wird rechnerisch vom Gewicht des Safranpulvers abgezogen. Das Safranpulver, vom dem rechnerisch die Feuchte abgezogen wurde, wird im folgenden als Safrantockne bezeichnet. Safranpulver, entsprechend 80 g Safrantrockne, wird mit 400 ml demineralisiertem Wasser gleichmäßig durchfeuchtet. Nach 30 Minuten gibt man 8000 ml Ethanol 96% hinzu und mazeriert leicht schüttelnd für 30 Minuten. Anschließend wird über möglichst wenig medizinischer Watte filtriert. Watte und Filterrückstand werden in einem getrennten Gefäß mit 400 ml demineralisiertem Wasser übergossen und nach fünf Minuten mit 8000 ml Ethanol 96% für 30 Minuten leicht schüttelnd mazeriert sowie für 3 Minuten im kochenden Wasserbad schüttelnd erhitzt. Nach dem Abkühlen auf Zimmertemperatur werden die beiden Filtrate vereinigt und nach zwölf Stunden filtriert. Vom gewogenen Filtrat werden 50 g bei max. 50°C bis zur Trockenheit eingeengt und gewogen (und anschließend verworfen). Das Gewicht des Gesamttrockenrückstandes des Restfiltrats wird berechnet. In das Filtrat wird Glucose in einem Gewicht eingerührt, daß dem 200fachen des Gesamttrockenrückstandes des Restfiltrats entspricht und bis zur gleichmäßigen Konsistenz des Teiges durchgerührt.

### Beispiel 1b: Herstellung eines Glucose enthaltenden Sirups

80,8 kg Glucose werden in 266,6 kg demineralisiertem Wasser heiß bis zur wasserklaren und bläschenfreien Lösung gelöst. Nach Abkühlung bis auf 40°C wird der frisch zubereitete Teig aus Beispiel 1a eingetragen und bis zur klaren, gelben und bläschenfreien Lösung erforderlichenfalls im Wasserbad von 40°C gelöst und noch am gleichen Tag zur Spirituose weiterverarbeitet.

### Beispiel 2a: Herstellung eines Fructose enthaltenden Konzentrats

100 g Safranfäden werden gemahlen und mit einem nichtmetallischen Sieb der lichten Maschenweite von 710 bis 180 Mikrometer gesiebt. Die Feuchte des Safranpulvers wird anhand einer Probe bestimmt. Die ermittelte Feuchtigkeit wird rechnerisch vom Gewicht des Safranpulvers abgezogen. Das Safranpulver, von dem rechnerisch die Feuchte abgezogen wurde, wird im folgenden als Safrantrockne bezeichnet. Safranpulver, entsprechend 80 g Safrantrockne, wird mit 400 ml demineralisiertem Wasser gleichmäßig durchfeuchtet. Nach 30 Minuten gibt man 8000 ml Ethanol 96% hinzu und mazeriert leicht schüttelnd für 30 Minuten. Anschließend wird über möglichst wenig medizinischer Watte filtriert. Watte und Filterrückstand werden in einem getrennten Gefäß mit 400 ml demineralisiertem Wasser übergossen und nach fünf Minuten mit 8000 ml Ethanol 96% für 30 Minuten leicht schüttelnd mazeriert sowie für 3 Minuten im kochenden Wasserbad schüttelnd erhitzt. Nach dem Abkühlen auf Zimmertemperatur werden die beiden Filtrate vereinigt und nach zwölf Stunden filtriert. Vom gewogenen Filtrat werden 50 g bei max. 50°C bis zur Trockenheit eingeengt und gewogen (und anschließend verworfen). Das Gewicht des Gesamttrockenrückstandes des Restfiltrats wird berechnet. In das Filtrat wird Fructose in einem Gewicht eingerührt, das dem 200fachen des Gesamttrockenrückstandes des Restfiltrats entspricht und bis zur klumpenfreien Konsistenz der Aufschwemmung gerührt.

### Beispiel 2b: Herstellung eines Fructose und Glucose enthaltenden Sirups

80,8 kg Glucose werden in 266,6 kg demineralisiertem Wasser heiß bis zur wasserklaren und bläschenfreien Lösung gelöst. Nach Abkühlung bis auf 40°C wird die frisch zubereitete Aufschwemmung aus Beispiel 2a eingetragen und bis zur klaren, gelben und bläschenfreien Lösung erforderlichenfalls im Wasserbad von 40°C gelöst und noch am gleichen Tag zur Spirituose weiterverarbeitet.

### Beispiel 3: Herstellung von Safranlikören

Bis zum Auftreten der ersten Kochbläschen werden 500 g Zucker (Saccharose) in 350 g demineralisiertem Wasser gelöst. Nach Abkühlung werden langsam und unter Schütteln 500 g des Safran-Glucose-Sirups des Beispiels 1b oder 500 g des Safran-Fructose-Glucose-Sirups des Beispiels 2b eingetragen und bis zur bläschenfrei klaren Lösung erforderlichenfalls unter Anwendung von möglichst wenig Wärme gelöst. Sodann werden jeweils langsam und unter Schütteln hinzugegeben: 200 g Weinbrand und 450 g Ethanol 96%. Es wird jeweils mit demineralisiertem Wasser auf 2000 g aufgefüllt und nach sieben Tagen filtriert. Der Alkoholgehalt beträgt ca. 28 Vol.-% in Abhängigkeit der bei der Herstellung angewandten Erwärmung.

### Beispiel 4: Herstellung von Safranaperitifs

Nach der Methode des Deutschen Arzneibuchs, 10. Ausgabe (= DAB 10), 1996, Eintrag "Tinkturen - Tincturae" wird aus den getrockneten Blüten von Artemisia laxa und/oder Artemisia glacialis (beides Beifuß-Arten aus der Familie der Compositae) eine Tinktur hergestellt. Diese Tinktur wird für folgende Aperitifs mit dem Alkoholgehalt von ca. 14 Vol.-% verwendet:

Bis zum Auftreten der ersten Bläschen werden 250 g Zucker (Saccharose) in 200 g demineralisiertem Wasser gelöst. Nach Abkühlung werden langsam und unter Schütteln 300 g des Safran-Glucose-Sirups des Beispiels 1b oder 300 g des Safran-Fructose-Glucose-Sirups des Beispiels 2b eingetragen und bis zur bläschenfreien klaren Lösung erforderlichenfalls unter Anwendung von möglichst wenig Wärme gelöst. Sodann werden langsam und unter Schütteln in dieser Reihenfolge jeweils hinzugegeben: 100 g Schottischer Whisky, 200 g Ethanol 96%, 10 g Beifuß-Tinktur. Es wird mit demineralisiertem Wasser jeweils auf 2000 g aufgefüllt und nach sieben Tagen filtriert.

## Patentansprüche

1. Zusammensetzung, die enthält:
- Safranbestandteile, erhältlich durch Entfernung des cellulosehaltigen Materials aus Safranfäden,
- ein oder mehrere Monosaccharide mit mindestens vier Kohlenstoffatomen und
- Ethanol.

2. Zusammensetzung nach Anspruch 1, dadurch gekennzeichnet, daß das Monosaccharid Glucose und/oder Fructose ist.

3. Zusammensetzung nach Anspruch 1 oder Anspruch 2, dadurch gekennzeichnet, daß das Gewichtsverhältnis von Safranbestandteilen zu Monosaccharid 1 zu 100 bis 700 ist.

4. Sirup, herstellbar durch Mischen einer Zusammensetzung nach einem der Ansprüche 1 bis 3 mit Wasser und einem oder mehreren Monosacchariden mit mindestens vier Kohlenstoffatomen.

5. Sirup nach Anspruch 4, dadurch gekennzeichnet, daß das zur Herstellung des Sirups verwendete Monosaccharid Glucose ist.

6. Sirup nach Anspruch 4 oder Anspruch 5, dadurch gekennzeichnet, daß das Gewichtsverhältnis von Safranbestandteilen zu Monosaccharid 1 zu 500 bis 4500 ist.

7. Spirituose, herstellbar aus einer Zusammensetzung gemäß einem der Ansprüche 1 bis 3 oder einem Sirup gemäß einem der Ansprüche 4 bis 6.

8. Spirituose, nach Anspruch 7, dadurch gekennzeichnet, daß sie hergestellt wird durch Vermischen eines Sirups gemäß einem der Ansprüche 4 bis 6 mit Saccharose, Wasser und Ethanol und/oder einem ethanolhaltigen Getränk.

9. Verfahren zur Herstellung einer Zusammensetzung gemäß einem der Ansprüche 1 bis 3,
dadurch gekennzeichnet, daß
- Safranfäden mit Ethanol und gegebenenfalls Wasser mazeriert werden,
- die unlöslichen Bestandteile abfiltriert werden, und
- zu dem Filtrat ein oder mehrere Monosaccharide mit mindestens vier Kohlenstoffatomen in einer Gewichtsmenge zugegeben werden, die dem 100- bis 700fachen des durch Eindampfen einer Filtratprobe ermittelten Gesamttrockenrückstandes des Filtrats entspricht.

10. Verfahren zur Herstellung eines Sirups gemäß einem der Ansprüche 4 bis 6,
dadurch gekennzeichnet, daß
eine Zusammensetzung gemäß einem der Ansprüche 1 bis 3 mit Wasser und einem oder mehreren Monosacchariden mit mindestens 4 Kohlenstoffatomen versetzt wird, wobei pro Gramm Trockensubstanz an für die Herstellung der Zusammensetzung gemäß einem der Ansprüche 1 bis 3 eingesetztem Safranfaden 0,5 bis 2 kg Monosaccharid oder Monosaccharide und 1,5 bis 7 kg Wasser verwendet werden.

11. Verfahren zur Herstellung einer Spirituose gemäß einem der Ansprüche 7 oder 8,
dadurch gekennzeichnet, daß
ein Sirup gemäß einem der Ansprüche 4 bis 6 mit Saccharose und Wasser in einem Gewichtsverhältnis von 1,0:0,5-3,0, Ethanol und/oder einem ethanolhaltigen Getränk und gegebenenfalls weiteren Zusatzstoffen versetzt wird, wobei das Gewichtsverhältnis von Sirup zu Saccharose 1,0:0,5-2,0 und das Gewichtsverhältnis von Sirup zu Ethanol und/oder ethanolhaltigem Getränk 1,0:0,3-3,0 beträgt, und daß gegebenenfalls die erhaltene Spirituose mit zusätzlichem Wasser verdünnt wird.

## Claims

1. Composition which contains:
- saffron constituents obtainable by removal of the cellulose-containing material from saffron threads,
- one or more monosaccharides having at least four carbon atoms and
- ethanol.

2. Composition according to Claim 1, characterized in that the monosaccharide is glucose and/or fructose.

3. Composition according to Claim 1 or Claim 2, characterized in that the weight ratio of saffron constituents to monosaccharide is 1:100 to 700.

4. Syrup which can be produced by mixing a composition according to one of Claims 1 to 3 with water and one or more monosaccharides having at least four carbon atoms.

5. Syrup according to Claim 4, characterized in that the monosaccharide used to produce the syrup is glucose.

6. Syrup according to Claim 4 or Claim 5, characterized in that the weight ratio of saffron constituents to monosaccharide is 1:500 to 4500.

7. Spirit which can be produced from a composition according to one of Claims 1 to 3 or from a syrup according to one of Claims 4 to 6.

8. Spirit according to Claim 7, characterized in that it is produced by mixing a syrup according to one of Claims 4 to 6 with sucrose, water and ethanol and/or an ethanol-containing beverage.

9. Process for the production of a composition according to one of Claims 1 to 3, characterized in that
- saffron threads are macerated with ethanol and optionally water,
- the insoluble constituents are filtered off, and
- one or more monosaccharides having at least four carbon atoms are added to the filtrate in a quantity by weight which corresponds to 100 to 700 times the total dry residue of the filtrate determined by evaporating a filtration sample.

10. Process for the production of a syrup according to one of Claims 4 to 6, characterized in that
a composition according to one of Claims 1 to 3 is mixed with water and one or more monosaccharides having at least 4 carbon atoms, 0.5 to 2 kg of monosaccharide or monosaccharides and 1.5 to 7 kg of water being used per gram of dry matter of saffron thread used for producing the composition according to one of Claims 1 to 3.

11. Process for the production of a spirit according to one of Claims 7 or 8, characterized in that
a syrup according to one of Claims 4 to 6 is mixed with sucrose and water in a weight ratio of 1.0:0.5-3.0, ethanol and/or an ethanol-containing beverage and optionally other additives, the weight ratio of syrup to sucrose being 1.0:0.5-2.0 and the weight ratio of syrup to ethanol and/or ethanol-containing beverage being 1.0:0.3-3.0, and in that optionally the spirit obtained is diluted with additional water.

## Revendications

1. Composition, qui contient :
- des composants de safran, pouvant être obtenus par élimination du matériau cellulosique de fils de safran;
- un ou plusieurs monosaccharides avec au moins quatre atomes de carbone, et
- de l'éthanol.

2. Composition suivant la revendication 1, caractérisée en ce que le monosaccharide est du glucose et/ou du fructose.

3. Composition suivant la revendication 1 ou la revendication 2, caractérisée en ce que le rapport pondéral composants de safran à monosaccharide est de 1 à 100 à 700.

4. Sirop, pouvant être préparé par mélange d'une composition suivant l'une des revendications 1 à 3 avec de l'eau et un ou plusieurs monosaccharides avec au moins quatre atomes de carbone.

5. Sirop suivant la revendication 4, caractérisé en ce que le monosaccharide utilisé pour la préparation du sirop est du glucose.

6. Sirop suivant la revendication 4 ou la revendication 5, caractérisé en ce que le rapport pondéral composants de safran à monosaccharide est de 1 à 500 à 4500.

7. Spiritueux, pouvant être préparé à partir d'une composition suivant l'une des revendications 1 à 3 ou d'un sirop suivant l'une des revendications 4 à 6.

8. Spiritueux suivant la revendication 7, caractérisé en ce qu'il est préparé par mélange d'un sirop suivant l'une des revendications 4 à 6 avec du saccharose, de l'eau et de l'éthanol et/ou avec une boisson contenant de l'éthanol.

9. Procédé de préparation d'une composition suivant l'une des revendications 1 à 3,
caractérisé en ce que :
- on fait macérer des fils de safran dans de l'éthanol et, le cas échéant, de l'eau;
- on sépare par filtration les composants insolubles, et
- on ajoute au filtrat un ou plusieurs monosaccharides avec au moins quatre atomes de carbone en une quantité pondérale qui correspond à 100 à 700 fois le résidu sec total du filtrat déterminé par évaporation d'un échantillon de filtrat.

10. Procédé de préparation d'un sirop suivant l'une des revendications 4 à 6,
caractérisé en ce qu'une composition suivant l'une des revendications 1 à 3 est mélangée avec de l'eau et un ou plusieurs monosaccharides ayant au moins 4 atomes de carbone, 0,5 à 2 kg de monosaccharide ou de monosaccharides et 1,5 à 7 kg d'eau étant utilisés par gramme de substance sèche de fil de safran utilisé pour la préparation de la composition suivant l'une des revendications 1 à 3.

11. Procédé de préparation d'un spiritueux suivant l'une des revendications 7 ou 8,
caractérisé en ce qu'on mélange un sirop suivant l'une des revendications 4 à 6 avec du saccharose et de l'eau dans un rapport pondéral de 1,0:0,5-3,0, avec de l'éthanol et/ou avec une boisson contenant de l'éthanol et, le cas échéant, avec d'autres additifs, le rapport pondéral sirop à saccharose s'élevant à 1,0:0,5-2,0 et le rapport pondéral sirop à éthanol et/ou boisson contenant de l'éthanol s'élevant à 1,0:0,3-3,0, et en ce que, le cas échéant, le spiritueux obtenu est dilué avec de l'eau supplémentaire.
